# EUROPEAN PATENT SPECIFICATION

(11) **EP 1 642 856 B1**
(45) Date of publication and mention of the grant of the patent: **15.02.2012**
(21) Application number: 05020448.6
(22) Date of filing: 20.09.2005
(51) Int. Cl.: B66B 7/10

(54) **Device and method for rope tension adjustment**
Einrichtung und Verfahren zur Seilspannungsabgleichung
Dispositif et méthode pour régler la tension du câble

(30) Priority: 21.09.2004 IT VI20040220
(43) Date of publication of application: 05.04.2006
(73) Proprietor: Pizzato Elettrica S.r.l., 36063 Marostica (Vicenza) (IT)
(72) Inventor: Pizzato, Marco, 36063 Marostica (Vicenza) (IT)
(74) Representative: Maroscia, Antonio

(56) References cited:
- EP-A- 1 136 723
- DE-U1- 20 216 773
- DE-U1- 29 517 079
- FR-A- 590 310
- FR-A- 858 388

## Description

### Field of the Invention

The present invention generally finds application in the field of safety systems and particularly relates to a device and a method for rope tension adjustment.

### State of the Art

Many adjustment devices are known which are designed to suitably adjust the tension of a rope. These devices may be advantageously used in rope-operated safety apparatus, in which a rope is tensioned along a predetermined path and one or more safety switches trip as soon as the rope is pulled or cut. In these applications, the safety switch triggers when the rope tension exceeds a predetermined maximum value or falls below a minimum value, thereby requiring accurate rope tension adjustment during installation.

Particularly, US-A-6,705,179 discloses an adjustment device having a box-like body having a cavity in which a spindle is provided which rotates along its longitudinal axis. The box-like body has a substantially circular section and two diametrically opposed apertures formed thereon. The spindle has a transverse bore that can be aligned with the apertures of the box-like body to allow the rope to be inserted through such bore and such apertures of the box-like body. Thus, when the rope is inserted in the bore, a simple rotation of the spindle causes the rope to be wound around it and tensioned.

An apparent drawback of this solution is that the maximum rope length that can be wound about the spindle is limited by the size of the inner cavity. Therefore, the rope has to be suitably cut before being tensioned, based on a prior estimation of the required length. This complicates installation and increases overall time requirements. Furthermore, there is the risk of a wrong estimation of the required rope length, which would cause the rope to be too short and be thence rejected, or too long, not fitting in the inner cavity space.

A further drawback of this solution is that the device has to be placed on a free length of rope which is long enough as to allow winding of the rope, which is pulled into the cavity from both apertures of the box-like body. These positioning requirements may involve a higher installation complexity.

Furthermore, spindle locking means are required to keep the rope under tension, which further complicate the device and increase costs therefore.

EP-A-581660 discloses a rope-operated safety switch having a rope tension adjustment device. Such adjustment device has a spindle which is pivotally mounted to a fork at its longitudinal ends. The spindle is substantially cylindrical and has a through hole extending from the lateral surface of the cylinder to a base thereof, to allow insertion of one end of the rope. In operation, one end of the rope is inserted in the through hole and the spindle is rotated so that the rope is wound around the lateral surface of the spindle, thereby being tensioned.

One drawback of this solution is that the spindle supporting fork has a relatively small size, which reduces the rope winding space.

Furthermore, in this solution the rope is locked under tension by a special mechanism, such as a ratchet gear, which involves an increase of manufacturing costs and only allows coarse tension adjustment.

US-A-2004/0088833 discloses a device for rope tension adjustment which has a holding portion against which the rope is clamped and a housing which is connected to or integral with a safety device. A rope tension meter is placed in the housing. Threaded means are provided to change the relative position of the housing and the holding portion, for precise rope tension adjustment. The holding portion comprises a main body and a plate which is adapted to press the rope against the main body, to clamp it and provide a first coarse tension adjustment.

A drawback of this solution is that the rope is only effectively clamped if the end of the rope has been previously changed. Ropes typically have a metal core and at least one polymeric coating. Due to the shape of the plate that clamps the rope against the main body, the rope end has to be stripped of its coating before being inserted in the clamping portion. Therefore, extra time is required for putting the device in operation.

Furthermore, in the above solution, the rope end is inserted in an inlet of the main body, is bent through an angle of nearly 180° and is led out through one outlet adjacent the inlet. This sequence of steps may be difficult with poorly flexible ropes, of relatively large diameter.

Another drawback consists in that both the clamping portion and the housing have no exterior protective arrangement for the operator, who may get injured therewith. The outer profile of the device may cause the operator to be accidentally injured, for instance if he/she grasps the rope at the clamping portion.

Yet another drawback of this solution is that the device has a very complex construction and has a relatively high cost.

EP-A-1136723 discloses a rope gripper for connecting a rope to a rope operated switch. The gripper comprises a main tubular body with an inlet for the rope realized on a transverse surface of the tubular body and an outlet for the rope realized on the lateral surface of the tubular body..

The gripper is also provided with jaw clamps for providing coarse tension adjustment, in order to pull the rope to an approximation of the correct tension during the assembly

However, this known rope gripper doesn't allow the fine tensioning of the rope, which has to be realized by means of external further tensioning device.

Moreover, after the fine adjustment of the tension has been provided, a pulling back of the rope occurs, causing a minimum loss of the given tension.

DE20216773, FR858388 and FR590310 disclose a device for adjusting tension of ordinary ropes which have no provision for connection to a safety switch.

### Summary of the invention

A primary object of this invention is to obviate the above drawbacks, by providing a safety apparatus for rope tension adjustment which involves a simple and quick installation.

A particular object is to provide an apparatus that has relatively low manufacturing costs and is therefore cost-effective.

A further object of the invention is to provide an apparatus having a tensioning device which combines sturdiness and durability.

Yet another particular object is to provide a tensioning device that is safe and profiled in such a manner as to dramatically reduce accidental injury risks.

A further object of the invention is to provide a device that can be also conveniently and effectively used for relatively stiff or large-diameter ropes.

These objects, as well as other objects that will be more apparent hereafter, are fulfilled, according to claim 1, by a safety apparatus comprising at least one tensioned rope and at least one safety switch, adapted to be actuated when predetermined variations in the tension of the rope occur, and a rope tensioning device comprising: a main body having a lateral surface that defines a longitudinal axis, at least one first and one second transverse end surfaces; a passage in the main body for a rope to be tensioned, the passage having one inlet and one outlet for the rope, the inlet being formed in the first transverse surface; at least one first anchor member associated to the main body for connection to a safety switch or a fixed support of the safety apparatus, means for clamping the main body against the rope in the passage; wherein the outlet for the rope is formed in a surface other than the first transverse surface, so that the passage extends substantially straight or with a small curvature to impart a negligible bending to the rope upon insertion and operation thereof.

The apparatus is characterized in that said device further comprises screw and nut means for fine adjustment of the tension of said rope between said main body and said first anchor member.

Thanks to this particular arrangement, an adjustment device is obtained, which combines quick installation, with a small number of steps, simple operation and relative cost-effectiveness.

Moreover, means for fine adjustment of rope tension allow to obtain a precise value of the final tension of the rope, avoiding any minimum elastic return thereof.

### Brief Description of the Drawings

Further features and advantages of the invention will be more apparent from the detailed description of a few preferred, non-exclusive embodiments of an adjustment device according to the invention, which are described as non-limiting examples with the help of the annexed drawings, in which:
FIG. 1 is a perspective view of a first embodiment of the apparatus according to the invention;
FIG. 2 is a cutaway view of the apparatus of FIG. 1;
FIG. 3 is an enlarged view of a detail of FIG. 2;
FIG. 4 is a perspective view of a second embodiment of the device according to the invention;
FIG. 5 is a cutaway view of the apparatus of FIG. 4;
FIG. 6 is an enlarged view of a detail of FIG. 5;
FIGURES 7 to 9 are exploded views of the apparatus of FIG. 1;
FIGURES 10 to 12 are exploded views of the device apparatus of FIG. 4.

### Detailed description of a preferred embodiment

Particularly referring to the above figures, a device for rope tension adjustment according to the invention is described, which is generally designated with numeral 1. The device 1 may be advantageously used for safety apparatus of the type that comprises at least one rope F under tension and at least one safety switch S. In a safety apparatus of this type, the rope F generally delimits a dangerous area and is installed in a constantly tensioned state.

Rope F may have one end connected to the safety switch S and one end connected to a fixed support. Safety switch S may be actuated when predetermined changes in the tension of the rope F occur. More in detail, the switch S may be actuated either when the tension of the rope F exceeds a predetermined maximum value, e.g. when an operator's grasps and pulls the rope F or a machine accidentally hits the rope F, or when the tension of the rope D falls below a predetermined minimum value, e.g. when the rope F is cut.

Device 1 comprises a main body 2 having a lateral surface 3 that defines a longitudinal axis L, and at least one first and one second transverse end surfaces 4, 5. The main body 2 further comprises one passage 6 for the rope F to be tensioned, which has an inlet 7 and an outlet 8 for the rope.

There are further provided at least one first anchor member 9 associated to the main body 2 for connection to a safety switch S or a fixed support P of the safety apparatus, and means 10 for clamping the main body 2 against the rope F, when the latter is in the passage 6.

As is shown in the annexed drawings, the inlet 7 is formed in the first transverse surface 4 and, according to the invention, the outlet 8 for the rope F is formed in a surface 3, 5 other than the first transverse surface 4. Thus, the passage 6 is substantially straight or has a small curvature, to impart a negligible bending moment to the rope F during insertion and operation thereof.

More in detail, the clamping means 10 may comprise at least one threaded member 11 which is adapted to provide a first coarse adjustment of the tension of the rope F and furthermore, the device 1 includes appropriate means 12 for fine tension adjustment.

The threaded member 11 may be associated to the main body 2 to compress the rope F and lock it under tension, thereby providing a coarse adjustment thereof. More in detail, the threaded member 11 may be a grub-screw 13 to be tightened in a threaded hole 14. The latter may be formed in the lateral surface 3, intersecting the passage 6, so that the grub-screw can compress the rope F against an inner wall of the passage 6 to lock it.

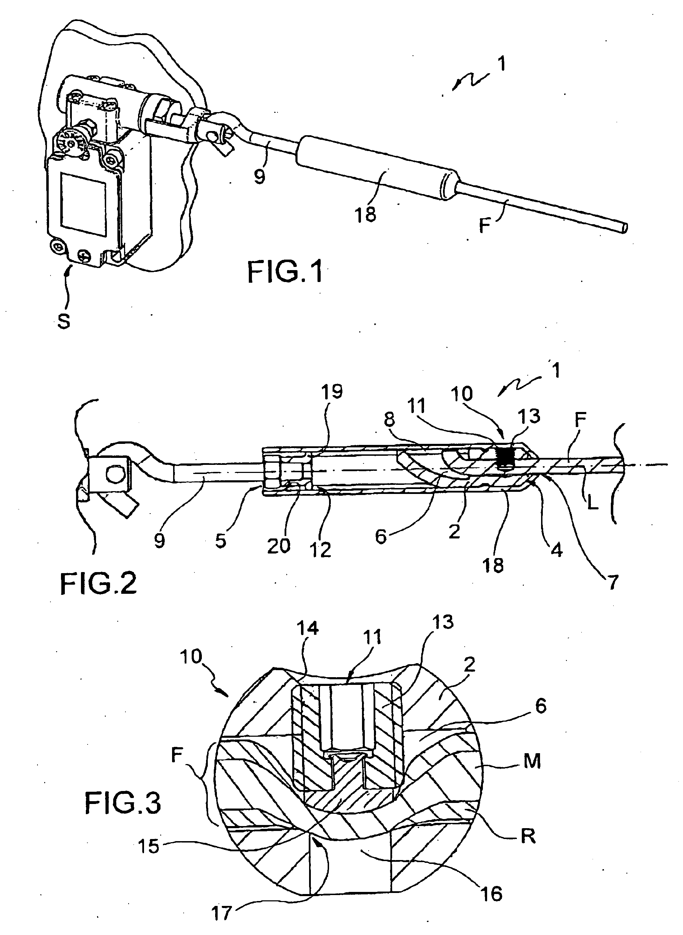

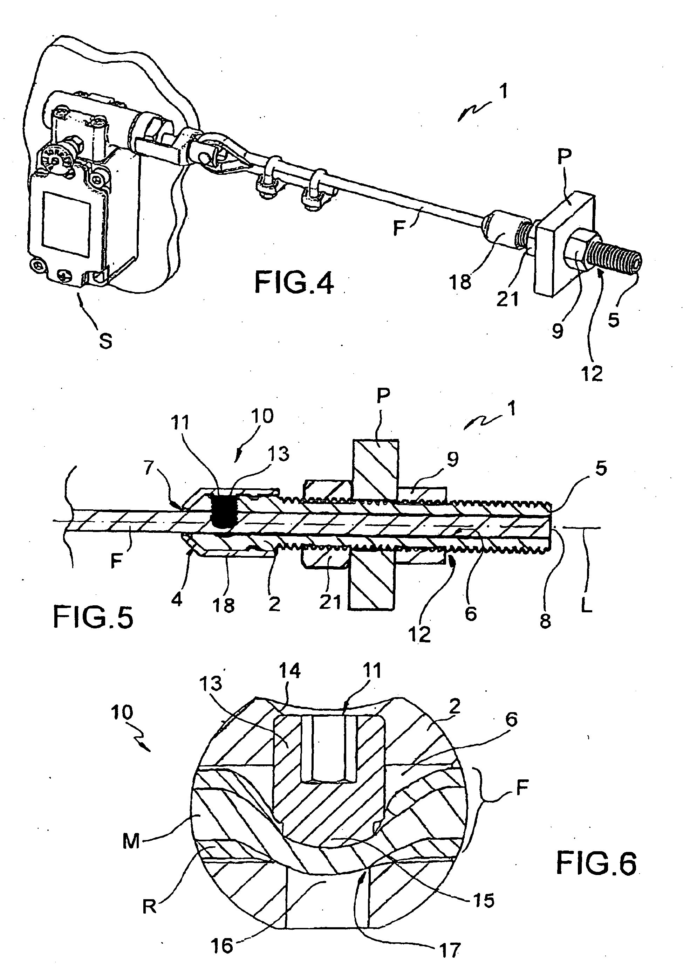

Generally, the rope F has a metal core M; covered with a surface layer R of a polymeric material. The surface layer R may hinder clamping thereof against the main body 2. For this reason, the grub-screw 13 may have a conveniently profiled end portion 15, to compress the rope F and at least partly penetrate the surface layer R. The profiled portion 15 preferably has a spherical shape, but may also have other shapes, such as a conical or frustoconical shape. Furthermore, the profiled portion 15 may be integral with the grub-screw 13, as shown in FIG. 6, or connected thereto as shown in FIG. 3, to limit rotation of the portion 15 as the grub-screw 13 is rotated and thereby reduce twisting stresses on the rope F.

In order to further improve clamping of the rope F, the main body 2 may have an inner cavity 16 facing toward and coaxial to the threaded hole 14, as shown in FIG. 3 and FIG. 6. The inner cavity 16 receives a portion of the rope F, compressed by the grub-screw 13, thereby further hindering any longitudinal motion of the rope F relative to the main body 2. The junction edge 17 between the inner cavity 16 and the passage 6 may have a radius of curvature of various values. Particularly, both the radius of curvature of the junction edge 17 and the shape of the profiled portion 15 of the grub-screw 13 may be conveniently selected to prevent the core M of the rope F from being damaged and its resistance from being affected.

Still for the purpose of improving the action of clamping the rope F against the main body 2, the device 1 may include a plurality of grub-screws 13, to be tightened in corresponding transverse threaded holes 14 of the main body 2.

As is shown in the annexed drawings, the main body 2 and the first anchor member 9 may be distinct elements, separate from the safety switch S, to increase the possibilities of positioning them in the safety apparatus.

The means 12 for fine adjustment of the tension of the rope F is a nut and screw arrangement between the main body 2 and the first anchor member 9, so that fine tension adjustment may be obtained by a relative longitudinal movement between the main body 2, integral with an end of the rope F, and the first anchor member 9, integral with the safety switch S or the fixed support P.

To prevent operators from being accidentally injured as they hit or grasp the device 1, a protective enclosure 18 is provided which is adapted to cover at least the lateral surface 3 and the grub-screw 13. More in detail, the protective enclosure 18 may include a substantially cylindrical polymeric sleeve whose inside diameter is slightly larger than the outside diameter of the lateral surface 3. Thus, the protective enclosure 18 may be only fitted when the grub-screw 13 is fully tightened.

The safety degree of the device 1 may be further increased by forming the lateral surface 13 with no sharp edges, and preferably with a substantially cylindrical shape, and by forming the first transverse surface 4, in which the inlet 7 for the rope F is formed, with a substantially conical, frustoconical or rounded shape.

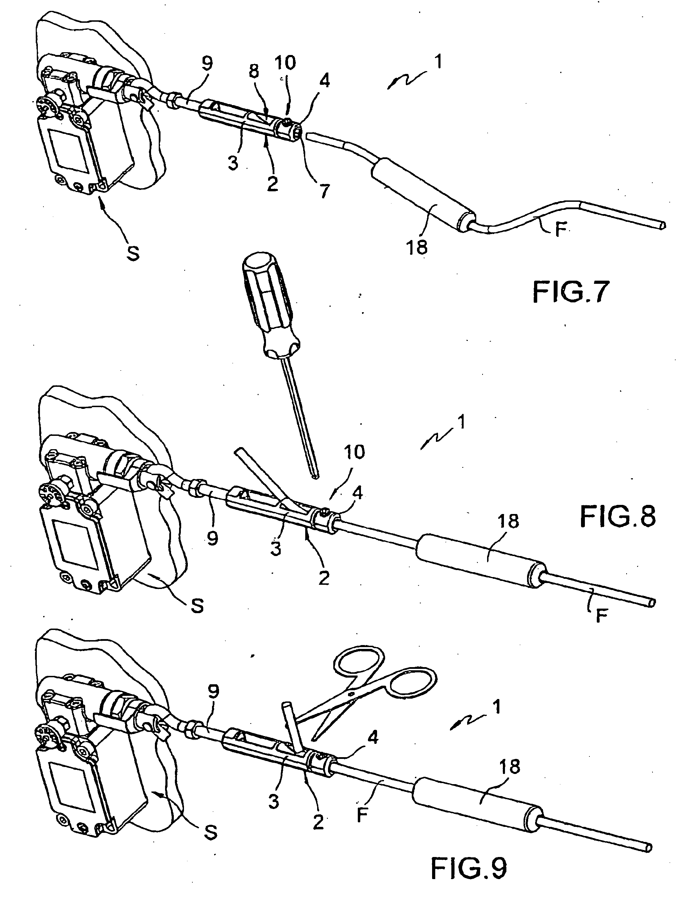

In certain preferred embodiments, the outlet 8 may be formed in the lateral surface 3, as shown in FIG. 2 and FIG. 7, so that the passage 6 is curved, with an arc of curvature of less than p/2 (rad). In other preferred embodiments, the outlet 8 may be formed in the second transverse surface 5, as shown in FIG. 5, so that the passage 6 is substantially straight.

If the outlet 8 is formed in the lateral surface 3, the fine adjustment means 12 may include a longitudinal threaded end 19 of the first anchor member 9, to be tightened in a threaded receptacle 20 at the second transverse surface 5 of the main body 2. Furthermore, the protective enclosure 18 may extend longitudinally to a sufficient extent as to also cover at least partly the first anchor member 9 at the threaded end 19.

If the outlet 8 is formed in the second transverse surface 5, the first anchor element 9 may be arranged to be tightened on the main body 2 to abut against the fixed support P of the safety apparatus, and the device 1 may include a second anchor member 21, separate from the first. The second anchor member 21 may be arranged to be tightened on the main body 2 to abut against the fixed support P on the opposite side from the first anchor member 9.

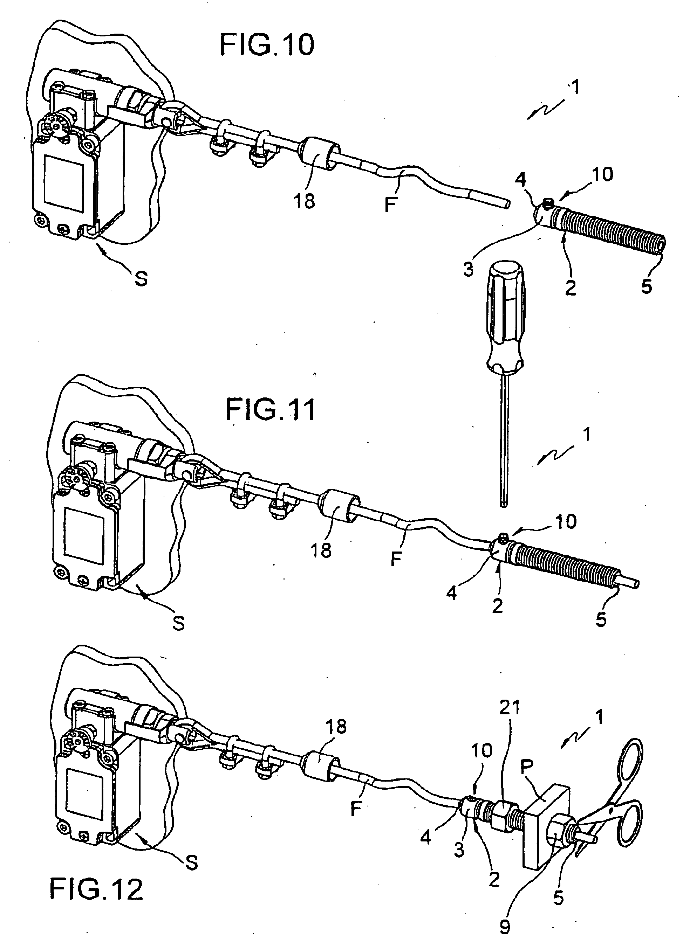

The above adjustment device 1 may be advantageously used for adjusting the tension of a rope F in a method including the following steps:
In a first step a) a safety apparatus is provided, which comprises at least one tensioned rope F and at least one safety switch S adapted to be actuated when predetermined variations in the tension of the rope F occur.
In the next steps b), c), d) a tension adjustment device as described above is provided.
In a fifth step e), one end of the rope F is inserted in the inlet 7. The rope F is introduced in the passage 6 and its end is led out through the outlet 8 so that, thanks to the particular profile of the passage 6, the rope F is subjected to a small bending moment, during both insertion and operation thereof.
In a next step f), the rope is clamped against the main body 2. More precisely, in this step the assembler may pull the end of the rope F coming out of the outlet 8 and tension the rope F before clamping it by using the clamping means 10, as shown in FIG. 8 and FIG. 11.
In a later step g) the tension of the rope F is finely adjusted by operating the fine adjustment means 12.

A further step may be conveniently provided, in which the end of the rope F coming out of the outlet 8 is cut, as shown in FIG. 9 and FIG. 12. Finally, the protective enclosure 18 may be fitted on the main body 2, to cover the main body 2 and the grub-screw. The protective enclosure 18 may be slipped over the rope F before the insertion of the latter in the main body 2, as shown in FIG. 7 and FIG. 10.

The above disclosure clearly shows that the device of the invention fulfills the proposed objects and, particularly, that a relatively inexpensive device may be obtained, which may be also easily fitted in a safety apparatus.

The device of this invention is susceptible of numerous modifications and changes all falling within the scope of the appended claims. All the details thereof may be replaced by other technically equivalent parts, and the materials may vary depending on different needs, without departure from the scope of the invention.

While the device has been described with particular reference to the accompanying figures, the numerals referred to in the disclosure and claims are only used for the sake of a better intelligibility of the invention and shall not be intended to limit the claimed scope in any manner.

## Claims

1. A rope operated safety switch, comprising:
- at least one safety switch (S);
- at least one rope (F) having one end connected to said safety switch (S) and being suitable to act on this latter when predetermined variations in the tension of the rope (F) occur;
- a device (1) for adjusting the tension of said rope (F), which device comprises:
- a main body (2) with a lateral surface (3) defining a longitudinal axis (L) and at least one first and one second transverse end surfaces (4, 5);
- a passage (6) in said main body (2) for said rope (F) to be tensioned, said passage (6) having an inlet (7) and an outlet (8) for said rope (F), said inlet (7) being formed in said first transverse surface (4);
- at least one first anchor member (9) associated to said main body (2) for connection to said safety switch (S) or to a fixed support (P) of said safety apparatus,
- means (10) for clamping said main body (2) against said rope (F) in said passage (6);
wherein said outlet (8) for said rope (F) is formed in a surface (3, 5) other than said first transverse surface (4), so that said passage (6) extends substantially straight or with a small curvature to impart a negligible bending to said rope (F) upon insertion and operation thereof,
**characterized in that** said device (1) further comprises screw and nut means (12) for fine adjustment of the tension of the rope (F) between said main body (2) and said first anchor member (9) by means of a relative longitudinal movement between said main body (2), integral with an end of said rope (F), and said first anchor member (9) integral with said safety switch (S), respectively with said fixed support (P).

2. An apparatus as claimed in claim 1, **characterized in that** said clamping means (10) comprise at least one threaded member (11) associated to said main body (2), for compressing and clamping the rope (F) and for providing coarse tension adjustment.

3. An apparatus as claimed in claim 2, **characterized in that** said threaded member (11) is a grub-screw (13), which is tightened in a threaded hole (14) formed in said lateral surface (3) and intersecting said passage (6).

4. An apparatus as claimed in claim 3, **characterized in that** said grub-screw (13) has a profiled end portion (15), which is adapted to compress the rope (F) and at least partly penetrate a surface layer (R).

5. An apparatus as claimed in claim 4, **characterized in that** said main body (2) comprises an inner cavity (16) facing toward and coaxial to said threaded hole (14), which is adapted to receive a portion of the rope (F), compressed by said grub-screw (13).

6. An apparatus as claimed in claim 1, **characterized in that** said main body (2) and said first anchor member (9) are distinct members, separate from the safety switch (S).

7. An apparatus as claimed in claim 3, **characterized in that** it comprises a protective enclosure (18) adapted to cover at least said lateral surface (3) and said at least one grub-screw (13).

8. An apparatus as claimed in claim 1, **characterized in that** said lateral surface (3) is substantially cylindrical.

9. An apparatus as claimed in claim 1, **characterized in that** said first transverse surface (4) in which said inlet (7) for the rope (F) is formed, has a substantially conical, frustoconical or rounded shape, to increase the degree of safety.

10. An apparatus as claimed in claim 1, **characterized in that** said outlet (8) is formed in said lateral surface (3) and said passage (6) is curved with an arc of curvature of less than π/2 (rad).

11. An apparatus as claimed in claims 1, **characterized in that** said fine adjustment means (12) include a longitudinal threaded end (19) of said first anchor member (9), to be tightened in a threaded receptacle (20), formed at said second transverse surface (5).

12. An apparatus as claimed in claim 7, **characterized in that** said protective enclosure (18) extends longitudinally to a sufficient extent as to cover at least partly said first anchor member (9) at said threaded end (19).

13. An apparatus as claimed in one or more of the preceding claims, **characterized in that** it includes a plurality of grub-screws (13), to be tightened in corresponding transverse threaded holes (14) of said main body (2) to improve the clamping action on the rope (F).

14. An apparatus as claimed in claim 1, **characterized in that** said outlet (8) is formed in said second transverse surface (5) and said passage (6) is substantially straight.

15. An apparatus as claimed in claim 14, **characterized in that** said first anchor element (9) is arranged to be tightened on said main body (2) to abut against said fixed support (P) of the safety apparatus.

16. An apparatus as claimed in claim 15, **characterized in that** it comprises a second anchor member (21), separate from the first, which is arranged to be tightened on said main body (2) to abut against the fixed support (P) on the opposite side from the first anchor member (9).

17. An apparatus as claimed in one or more of the preceding claims, **characterized in that** said protective enclosure (18) includes a substantially cylindrical polymeric sleeve whose inside diameter is slightly larger than the outside diameter of said lateral surface (3), so that said protective enclosure (18) may be only fitted when said at least one grub-screw (13) is fully tightened.

## Patentansprüche

1. Seilzugbetätigter Sicherheitsschalter, der Folgendes aufweist:
- zumindest einen Sicherheitsschalter (S);
- zumindest ein Seil (F), dessen eines Ende mit dem Sicherheitsschalter (S) verbunden ist, und welches geeignet ist, um auf Letzteren zu wirken, wenn vorbestimmte Variationen der Spannung des Seils (F) auftreten;
- eine Vorrichtung (1) zum Einstellen der Spannung des Seils (F), wobei die Vorrichtung Folgendes aufweist:
- einen Hauptkörper (2) mit einer Seitenfläche (3), die eine Längsachse (L) definiert, und mit mindestens einer ersten und mindestens einer zweiten Querendfläche (4, 5);
- einen Durchlass (6) im Hauptkörper (2) für das zu spannende Seil (F), wobei der Durchlass (6) einen Einlass (7) und einen Auslass (8) für das Seil (F) hat, wobei der Einlass (7) in der ersten Querfläche (4) ausgeformt ist;
- zumindest ein erstes Verankerungsglied (9), welches mit dem Hauptkörper (2) zur Verbindung mit dem Sicherheitsschalter (S) oder mit einem festen Träger (P) der Sicherheitsvorrichtung assoziiert ist;
- Mittel (10) zum Klemmen des Hauptkörpers (2) gegen das Seil (F) in dem Durchlass (6);
- wobei der Auslass (8) für das Seil (F) in einer anderen Oberfläche (3, 5) als der ersten Querfläche (4) ausgeformt ist, so dass der Durchlass (6) sich im Wesentlichen gerade oder mit einer kleinen Krümmung erstreckt, um eine vernachlässigbare Biegung auf das Seil (F) beim Einführen und Betrieb davon aufzuprägen,
- **dadurch gekennzeichnet, dass** die Vorrichtung (1) weiter Schrauben- und Muttermittel (12) zur Feineinstellung der Spannung des Seils (F) zwischen dem Hauptkörper (2) und dem ersten Verankerungsglied (9) aufweist, und zwar zur Einstellung mittels einer relativen Längsbewegung zwischen dem Hauptkörper (2), der integral mit einem Ende des Seils (F) ist, und dem ersten Verankerungsglied (9), das integral mit dem Sicherheitsschalter (S) ist, und zwar bezüglich des festen Trägers (P).

2. Vorrichtung nach Anspruch 1, **dadurch gekennzeichnet, dass** die Klemmmittel (10) zumindest ein mit Gewinde versehenes Glied (11) aufweisen, welches mit dem Hauptkörper (2) assoziiert ist, um das Seil (F) zusammenzudrücken und zu klemmen, und um eine grobe Spannungseinstellung vorzusehen.

3. Vorrichtung nach Anspruch 2, **dadurch gekennzeichnet, dass** das mit Gewinde versehene Glied (11) ein Gewindestift (13) ist, der in einem mit Gewinde versehenen Loch (14) festgezogen ist, welches in der Seitenfläche (3) ausgeformt ist und den Durchlass (6) schneidet.

4. Vorrichtung nach Anspruch 3, **dadurch gekennzeichnet, dass** der Gewindestift (13) einen mit Profil versehenen Endteil (15) besitzt, der geeignet ist, um das Seil (F) zusammenzudrücken und zumindest teilweise in eine Oberflächenschicht (R) einzudringen.

5. Vorrichtung nach Anspruch 4, **dadurch gekennzeichnet, dass** der Hauptkörper (2) einen inneren Hohlraum (16) aufweist, der zu dem mit Gewinde versehenen Loch (14) hinweist und koaxial dazu ist, der geeignet ist, um einen Teil des Seils (F) aufzunehmen, welches durch den Gewindestift (13) zusammengedrückt wird.

6. Vorrichtung nach Anspruch 1, **dadurch gekennzeichnet, dass** der Hauptkörper (2) und das erste Verankerungsglied (9) getrennte Glieder sind, die vom Sicherheitsschalter (S) getrennt sind.

7. Vorrichtung nach Anspruch 3, **dadurch gekennzeichnet, dass** sie eine Schutzhülle (18) aufweist, die geeignet ist, um zumindest die Seitenfläche (3) und den mindestens einen Gewindestift (13) zu bedecken.

8. Vorrichtung nach Anspruch 1, **dadurch gekennzeichnet, dass** die Seitenfläche (3) im Wesentlichen zylindrisch ist.

9. Vorrichtung nach Anspruch 1, **dadurch gekennzeichnet, dass** die erste Querfläche (4), in der der Einlass (7) für das Seil (F) ausgeformt ist, eine im Wesentlichen konische, kegelstumpfförmige oder gerundete Form hat, um den Sicherheitsgrad zu steigern.

10. Vorrichtung nach Anspruch 1, **dadurch gekennzeichnet, dass** der Auslass (8) in der Seitenfläche (3) ausgeformt ist, und dass der Durchlass (6) mit einem Krümmungsbogen von weniger als π/2 (rad) gekrümmt ist.

11. Vorrichtung nach Anspruch 1, **dadurch gekennzeichnet, dass** die Feineinstellmittel (12) ein in Längsrichtung mit Gewinde versehenes Ende (19) des ersten Verankerungsgliedes (9) aufweisen, welches in einer mit Gewinde versehenen Aufnahme (20) festzuziehen bzw. zu schrauben ist, die an der zweiten Querfläche (5) ausgeformt ist.

12. Vorrichtung nach Anspruch 7, **dadurch gekennzeichnet, dass** die Schutzhülle (18) sich in Längsrichtung in einem ausreichenden Ausmaß erstreckt, so dass sie zumindest teilweise das erste Verankerungsglied (9) an dem mit Gewinde versehenen Ende (19) bedeckt.

13. Vorrichtung nach einem oder mehreren der vorhergehenden Ansprüche, **dadurch gekennzeichnet, dass** sie eine Vielzahl von Gewindestiften (13) aufweist, die in entsprechenden querverlaufenden mit Gewinde versehenen Löchern (14) des Hauptkörpers (2) festzuziehen sind, um die Klemmwirkung auf das Seil (F) zu verbessern.

14. Vorrichtung nach Anspruch 1, **dadurch gekennzeichnet, dass** der Auslass (8) in der zweiten Querfläche (5) geformt ist, und dass der Durchlass (6) im Wesentlichen gerade ist.

15. Vorrichtung nach Anspruch 14, **dadurch gekennzeichnet, dass** das erste Verankerungsglied (9) so angeordnet ist, dass es an dem Hauptkörper (2) so festgezogen wird, dass es gegen den festen Träger (P) der Sicherheitsvorrichtung anliegt.

16. Vorrichtung nach Anspruch 15, **dadurch gekennzeichnet, dass** sie ein zweites Verankerungsglied (21) aufweist, welches vom ersten getrennt ist, welches angeordnet ist, um an dem Hauptkörper (2) festgezogen zu werden, um an dem festen Träger (P) auf der gegenüberliegenden Seite zum ersten Verankerungsglied (9) anzuliegen.

17. Vorrichtung nach einem oder mehreren der vorhergehenden Ansprüche, **dadurch gekennzeichnet, dass** die Schutzhülle (18) eine im Wesentlichen zylindrische Polymerhülse aufweist, deren Innendurchmesser geringfügig größer ist als der Außendurchmesser der Seitenfläche (3), so dass die Schutzhülle (18) nur eingepasst werden kann, wenn der mindestens eine Gewindestift (13) vollständig festgezogen ist.

## Revendications

1. Interrupteur de sécurité actionné par câble, comprenant :
- au moins un interrupteur de sécurité (S) ;
- au moins un câble (F) ayant une extrémité connectée audit interrupteur de sécurité (S) et étant approprié pour agir sur ce dernier lorsqu'il se produit des variations prédéterminées de la tension du câble (F) ;
- un dispositif (1) pour ajuster la tension dudit câble (F), lequel dispositif comprend :
- un corps principal (2) ayant une surface latérale (3) définissant un axe longitudinal (L) et au moins une première et une deuxième surfaces d'extrémité transversales (4, 5) ;
- un passage (6) dans ledit corps principal (2) pour ledit câble (F) qui doit être tendu, ledit passage (6) ayant un orifice d'entrée (7) et un orifice de sortie (8) pour ledit câble (F), ledit orifice d'entrée (7) étant formé dans ladite première surface transversale (4) ;
- au moins un premier organe d'ancrage (9) associé audit corps principal (2) pour la connexion audit interrupteur de sécurité (S) ou à un support fixe (P) dudit appareil de sécurité,
- des moyens (10) pour le serrage dudit corps principal (2) contre ledit câble (F) dans ledit passage (6) ;
ledit orifice de sortie (8) pour ledit câble (F) étant formé dans une surface (3, 5) autre que ladite première surface transversale (4), de telle sorte que ledit passage (6) s'étende essentiellement en ligne droite ou selon une petite courbure pour conférer une flexion négligeable audit câble (F) lors de son insertion et son actionnement,
**caractérisé en ce que** ledit dispositif (1) comprend en outre des moyens formant vis et écrou (12) pour un ajustement fin de la tension du câble (F) entre ledit corps principal (2) et ledit premier organe d'ancrage (9) au moyen d'un déplacement longitudinal relatif entre ledit corps principal (2), incorporé à une extrémité dudit câble (F), et ledit premier organe d'ancrage (9) incorporé audit interrupteur de sécurité (S), ou respectivement audit support fixe (P).

2. Appareil selon la revendication 1, **caractérisé en ce que** lesdits moyens de serrage (10) comprennent au moins un organe fileté (11) associé audit corps principal (2), pour comprimer et serrer le câble (F) et pour permettre un ajustement de tension approximatif.

3. Appareil selon la revendication 2, **caractérisé en ce que** ledit organe fileté (11) est une vis sans tête (13), qui est vissée dans un trou taraudé (14) formé dans ladite surface latérale (3) et coupant ledit passage (6).

4. Appareil selon la revendication 3, **caractérisé en ce que** ladite vis sans tête (13) a une partie d'extrémité profilée (15), qui est adaptée pour comprimer le câble (F) et pénétrer au moins partiellement dans une couche superficielle (R).

5. Appareil selon la revendication 4, **caractérisé en ce que** ledit corps principal (2) comprend une cavité intérieure (16) dirigée vers ledit trou taraudé (14) et coaxiale à celui-ci, et qui est adaptée pour recevoir une partie du câble (F), comprimée par ladite vis sans tête (13).

6. Appareil selon la revendication 1, **caractérisé en ce que** ledit corps principal (2) et ledit premier organe d'ancrage (9) sont des organes distincts, distincts de l'interrupteur de sécurité (S).

7. Appareil selon la revendication 3, **caractérisé en ce qu'**il comprend une enceinte de protection (18) adaptée pour recouvrir au moins ladite surface latérale (3) et ladite au moins une vis sans tête (13).

8. Appareil selon la revendication 1, **caractérisé en ce que** ladite surface latérale (3) est essentiellement cylindrique.

9. Appareil selon la revendication 1, **caractérisé en ce que** ladite première surface transversale (4) dans laquelle est formé ledit orifice d'entrée (7) pour le câble (F) a une forme essentiellement conique, tronconique ou arrondie, pour augmenter le degré de sécurité.

10. Appareil selon la revendication 1, **caractérisé en ce que** ledit orifice de sortie (8) est formé dans ladite surface latérale (3), et ledit passage (6) est incurvé selon un arc de courbure inférieur à π/2 (rad).

11. Appareil selon la revendication 1, **caractérisé en ce que** lesdits moyens d'ajustement fin (12) comprennent une extrémité longitudinale filetée (19) dudit premier organe d'ancrage (9), destinée à être vissée dans un réceptacle taraudé (20), formé au niveau de ladite deuxième surface transversale (5).

12. Appareil selon la revendication 7, **caractérisé en ce que** ladite enceinte de protection (18) s'étend longitudinalement sur une étendue suffisante pour recouvrir au moins partiellement ledit premier organe d'ancrage (9) au niveau de ladite extrémité filetée (19).

13. Appareil selon une ou plusieurs des revendications précédentes, **caractérisé en ce qu'**il contient une pluralité de vis sans tête (13), destinées à être vissées dans des trous taraudés transversaux correspondants (14) dudit corps principal (2), pour améliorer l'action de serrage sur le câble (F).

14. Appareil selon la revendication 1, **caractérisé en ce que** ledit orifice de sortie (8) est formé dans ladite deuxième surface transversale (5) et ledit passage (6) est essentiellement rectiligne.

15. Appareil selon la revendication 14, **caractérisé en ce que** ledit premier organe d'ancrage (9) est agencé de façon à être vissé sur ledit corps principal (2) afin de venir en butée contre ledit support fixe (P) de l'appareil de sécurité.

16. Appareil selon la revendication 15, **caractérisé en ce qu'**il comprend un deuxième organe d'ancrage (21), distinct du premier, qui est conçu pour être vissé sur ledit corps principal (2) afin de venir en butée contre le support fixe (P), du côté opposé au premier organe d'ancrage (9).

17. Appareil selon une ou plusieurs des revendications précédentes, **caractérisé en ce que** ladite enceinte de protection (18) comprend un manchon polymère essentiellement cylindrique dont le diamètre intérieur est légèrement supérieur au diamètre extérieur de ladite surface latérale (3), de telle sorte que ladite enceinte de protection (18) ne puisse être montée que lorsque ladite au moins une vis sans tête (13) est totalement vissée.
